# EUROPÄISCHE PATENTSCHRIFT

(11) **EP 1 910 055 B1**
(45) Veröffentlichungstag und Bekanntmachung des Hinweises auf die Patenterteilung: **16.09.2009**
(21) Anmeldenummer: 06762432.0
(22) Anmeldetag: 03.07.2006
(51) Int. Cl.: B29C 47/88, F04D 27/02, H02P 3/14, H02P 21/00, H02P 29/04

(54) **BLASFOLIENANLAGE SOWIE VERFAHREN ZUM BETRIEB DERSELBEN**
BLOWN FILM MANUFACTURING INSTALLATION AND METHOD FOR THE OPERATION THEREOF
SYSTEME DE PRODUCTION DE FEUILLES SOUFFLEES ET PROCEDE D'EXPLOITATION CORRESPONDANT

(30) Priorität: 13.07.2005 DE 102005033206
(43) Veröffentlichungstag der Anmeldung: 16.04.2008
(73) Patentinhaber: Windmöller & Hölscher KG, 49525 Lengerich/Westf. (DE)
(72) Erfinder: MIDDELBERG, Gerhard, 49525 Lengerich (DE)
(86) Internationale Anmeldenummer: PCT/EP2006/006575
(87) Internationale Veröffentlichungsnummer: WO 2007/006472

(56) Entgegenhaltungen:
- DE-C- 658 639
- US-A- 5 676 893
- US-B1- 6 293 778
- KAUSHIK BHATTACHARJEE; ALOK GOYAL; SUMAN MAZUMDAR; MANISH KUMAR: "Energy optimization in rapid variation systems" CCECE 2004- CCGEI 2004, NIAGARA FALLS, MAY/MAI 2004 0-7803-8253-6/04/$17.00, [Online] Mai 2004 (2004-05), Seiten 1835-1838, XP002401927 Niagara Falls Gefunden im Internet: URL:http://ieeexplore.ieee.org/iel5/9317/2 9659/01347558.pdf> [gefunden am 2006-10-06]

## Beschreibung

Die Erfindung betrifft eine Blasfolienanlage sowie Verfahren zum Betrieb derselben.

Blasfolienanlagen sind aus zahlreichen Druckschriften (z. B. US 5,288,219) bekannt. Blasfolienanlagen sind in der Regel mit Kühl- beziehungsweise Temperiereinrichtungen versehen. Der Sinn dieser Kühlungseinrichtungen, welche in der Regel Gebläse mit Lüftungsrotoren umfassen, besteht in einer Kühlung der heißen, gerade extrudierten Kunststoffschmelze und der aus der Schmelze durch Auskühlung entstehenden Folie.

Oft werden die Folienschläuche sowohl von außen als auch von innen gekühlt. Die Innenkühlung bringt besondere technische Probleme mit sich, da die gerade extrudierten Folienschläuche oft eine geschlossene Folienblase bilden, so dass die Kühlungsluft auch wieder heraus gefördert werden muss.

Der Übergang des Folienmaterials von einer Kunststoffschmelze zu einer immer noch sehr heißen Folie findet bei modernen Extrusionsanlagen in der Regel kurz nach der Extrusion der Schmelze aus einem dafür vorgesehenen Ringspalt statt. Der Ort, an dem sich die Schmelze zur Folie wandelt, wird oft fälschlicherweise als "Frostlinie" bezeichnet. In der Realität ist diese Übergangsstelle jedoch ein ringförmiger Bereich der Umfangsfläche des Schmelze- beziehungsweise Folienschlauches. Dieser Bereich besitzt eine durchaus nennenswert Ausdehnung in der Transportrichtung des Folienschlauches, die von einigen Millimetern bis zu einigen Dutzend Zentimetern reichen kann. In diesem Bereich nehmen die ungeordneten Makromoleküle der Schmelze zumindest teilweise eine geordnete oder zumindest geordnetere Kristalitstruktur an. Obwohl es bei Kunststoffen eben nicht zu einem schlagartigen, definierten Phasenübergang - wie er beim Übergang von Wasser zu Eis stattfinden kann - kommt, ändern sich die Eigenschaften der Folienschmelze durch diese Wandlung zur immer noch sehr heißen Folie doch in einer für die Folienherstellung maßgeblichen Weise. So vermindert sich die Reckfähigkeit und steigert sich die Stabilität und Widerstandsfähigkeit des Folienmaterials durch diesen Übergang entscheidend. Der angesprochene Übergangsbereich wird aufgrund der Parallelen zum Gefrieren von Wasser im Folgenden "Frostbereich" genannt.

Aufgrund der Änderung des Reckverhaltens und der Widerstandsfähigkeit beim Durchlauf durch den Frostbereich werden die oft bei der Blasfolienherstellung verwendeten Kalibrierkörbe (siehe z. B. EP 1 488 910 A1) oberhalb des Frostbereiches angebracht beziehungsweise die Lage des Frostbereichs wird durch eine Variation der Kühl- oder Temperiereinrichtungen so gesteuert, dass sich der Frostbereich unterhalb des Kalibrierkorbes befindet.

Wenn der Frostbereich in den Kalibrierkorb hineinwandert, kann der Kalibrierkorb die Folienschmelze beschädigen. In diesem Fall ist es auch wahrscheinlich, dass das weichere Schmelzematerial vor Erreichen des Kalibrierkorbes einen "Bauch" ausbildet, das heißt, dass der Durchmesser des Schlauches vor Erreichen des Kalibrierkorbes größer ist als der des Kalibrierkorbes. Auch dieser Zustand ist höchst unerwünscht und wird von den Maschinenbedienern mit einer Regelung der Gebläse beantwortet, um Kühlverhalten und Innendruck der Folienblase anzupassen. Aufgrund der Schwierigkeiten, die diese Regelung mit sich bringt und der Trägheit derselben kommt es hierbei nicht selten zu einem Pumpverhalten im Bereich des dem Kalibrierkorb vorgelagerten "Bauches". Dieses Pumpverhalten führt zu umfangreichen Folienschäden oder gar zum Abriss der Folienblase. Ein Frostbereich, der zu weit vor dem beziehungsweise unterhalb des Kalibrierkorbes liegt, kann dazu führen, dass die Folie nicht im gewünschten Maße ausgereckt wird und das gewünschte Format nicht erreicht. Auch bei Blasfolienanlagen ohne Kalibrierkorb ist die Einstellung der Lage des Frostbereichs von großer Bedeutung.

Eine besondere Herausforderung stellt die Einstellung des Frostbereichs bei Formatwechseln dar.

Bei einem Formatwechsel, bei dem sich bedeutende physikalische Größen zwischen dem Ausgangsformat und dem Endformat nennenswert ändern, ist es sehr schwer, die Lage des Frostbereichs zu optimieren. Mit dem Wort "optimieren" ist im vorliegenden Zusammenhang gemeint, dass der Frostbereich nach einem Formatwechsel sowohl eine andere als auch eine gleiche Position in der Transportrichtung des Folienschlauchs als Solllage einnehmen kann. Oft ändert sich die Sollposition des Frostbereichs von Auftrag zu Auftrag, was auch eine Änderung der Position des Kalibrierkorbes notwendig machen kann.

Insbesondere bei Formatwechseln, bei denen sich das Volumen der Folienblase um bedeutende Beträge verändert, bedient man sich daher bisher einer oder mehrerer Klappen, mit denen die Luftzu- und/oder -abfuhr in geringer Zeit um große Beträge geändert werden kann. Diese Klappen sind in den Luftleitungen angebracht.

Allerdings führt die Betätigung dieser Klappen oft zu einer oder mehreren der folgenden unerwünschten Entwicklungen:
- einer zu schnellen Verschiebung der Frostlinie über das gewünschte Maß hinaus,
- zu dem oben angesprochenen Pumpverhalten oder
- zum Zusammenfallen der Folienblase.

In US 6,254,368 B1 und US 6293778 B1 wird vorgeschlagen, die Drehzahl der Lüftungsrotoren anzupassen, wenn sich der Bedarf nach Kühlluft ändert. Diese Maßnahme dürfte Unstetigkeiten in der Kühlluftversorgung vermeiden und dem Auftreten der vorstehend beschriebenen Nachteile vorbeugen. Offenbar führt die schnelle Regelung der Gebläseleistung mit den Klappen zu starken, oft unstetigen Änderungen der Gebläseleistung, welche unter anderem die genannten unerwünschten Entwicklungen nach sich ziehen. Es hat sich gezeigt, dass noch größere Unstetigkeiten auftreten können, wenn in Folge der Betätigung der Klappe in dem betroffenen Luftstrom zum Beispiel Phasenübergänge zwischen laminaren und turbulenten Strömungen auftreten.

Jedoch kommt es beim Bremsen der Rotoren zum Anfall elektrischer und/oder mechanischer (Brems-)Energie, wenn die Rotoren gebremst werden sollen.

Die Aufgabe der vorliegenden Erfindung besteht darin, eine Blasfolienanlage vorzuschlagen, bei welcher diese Bremsenergie adäquat genutzt wird.

Diese Aufgabe wird durch die kennzeichnenden Merkmale der Ansprüche 1 und 7 gelöst.

Die Zuführung des "freigewordenen" (aus der kinetischen Energie der Rotationsbewegung gewandelten) elektrischen Stromes zu einem weiteren Elektromotor hilft jedoch, Energie zu sparen. Hierbei ist es vorteilhaft, wenn es sich bei der weiteren Elektromaschine um ein Maschinenelement handelt, welches hauptsächlich im Dauerbetrieb läuft und dabei möglichst gleichförmig elektrische Leistung benötigt. Insbesondere in tropischen Ländern kann auch ein Belüftungsmotor der Klimaanlage für die Extruderhalle diese Anforderungen erfüllen.

In diesem Zusammenhang sind jedoch auch Elektromaschinen zu nennen, die an der Außenkühlung derselben oder einer anderen Blasfolienanlage mitwirken. Auch die Motoren der Extruder arbeiten während des Dauerbetriebs der Anlage gleichmäßig.

Die meisten Brems- oder Regelvorgänge fallen im Bereich der Innenkühlung an, weshalb sich hier alle erfindungsgemäßen Maßnahmen am meisten empfehlen. Teilweise ist es am vorteilhaftesten, Elektromaschinen, die der Innenkühlung zugeordnet sind, bei Bedarf generatorisch zu betreiben und den gewonnenen Strom den Motoren anderer Gebläse zuzuführen.

Trotz der eingangs geschilderten Nachteile der Steuerung und Regelung der Gebläseleistung beziehungsweise des Blasluftstroms durch Klappen kann es doch von Vorteil sein, solche an der Blasfolienanlage vorzusehen und insbesondere bei Änderungen großen Betrags einzusetzen.

In diesem Zusammenhang können durch die bremsbaren Lüftungsrotoren auch Ausgleichsmaßnahmen bei zu unstetigen Gebläseleistungsänderungen vorgenommen werden.

Insgesamt ist jedoch auch zu betonen, dass erfindungsgemäße Blasfolienanlagen auch im Normalbetrieb - das heißt außerhalb der Formatwechselzeiten - große Vorteile mit sich bringen. Es hat sich gezeigt, dass sich alle Regelmaßnahmen am Kühlgebläsestrom zwar sanft, aber doch mit ausreichender Geschwindigkeit mit solchen Blasfolienanlagen durchführen lassen. Regelkreisprobleme, wie das eingangs dargestellte "Pumpen" des Folienschlauches, lassen sich auch im Dauerbetrieb an erfindungsgemäßen Blasfolienanlagen besser vermeiden.

Die einzelnen Figuren zeigen:
- Fig. 1: Eine Skizze einer Blasfolienanlage
- Fig. 2: Eine Skizze eines Blaskopfes

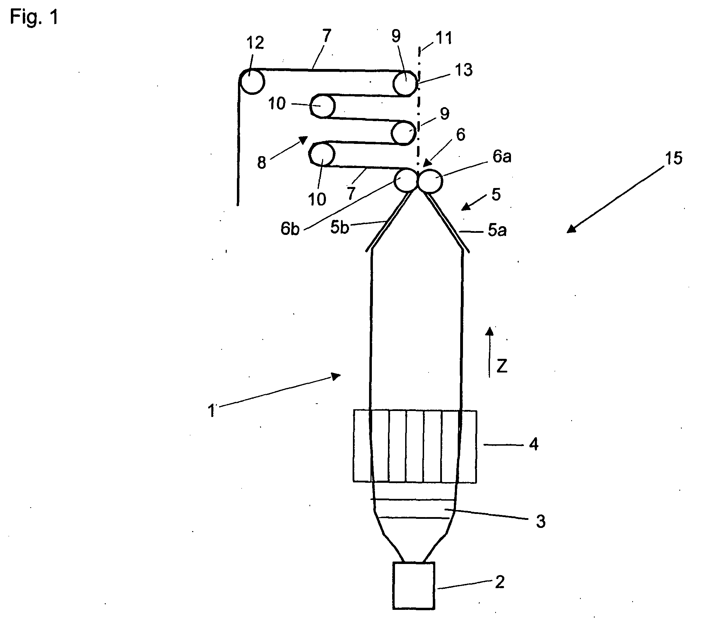

Fig. 1 zeigt eine Skizze einer Blasfolienanlage 15, bei der ein Blasfolienschlauch 1 von einem Blaskopf 2 extrudiert und in der Förderrichtung z weg gefördert wird. Auf die Darstellung von Gebläse oder Kühlvorrichtungen wurde in Figur 1 verzichtet. Das Material des Blasfolienschlauches 1 liegt zunächst noch als schmelzeartiges Extrudat vor. In dem Frostbereich 3 geht das Extrudat jedoch in Folie über, die anschließend den Kalibrierkorb 4 durchläuft. In der Flachlegeeinrichtung 5 wird der Folienschlauch zwischen den Flachlegeplatten 5a und 5b flach gelegt und in der Abquetschvorrichtung 6 zu den Abquetschwalzen 6a und 6b abgequetscht. Der Folienschlauch 1 liegt dann in Form des flachgelegten Folienschlauches 7 vor. Dieser durchläuft die Reversiervorrichtung 8, die mit Wendestangen 10 und Umlenkwalzen 9 ausgestattet ist. Die strichpunktierte Linie 11 bezeichnet die Symmetrielinie des Blasfolienschlauches 1. Nach dem Durchlaufen der Reversiervorrichtung 8 wird der flachgelegte Folienschlauch 7 über die Transportwalze 12 weiter geleitet. In der Regel wird der flachgelegte Folienschlauch anschließend einer Wickelstelle zugeführt.

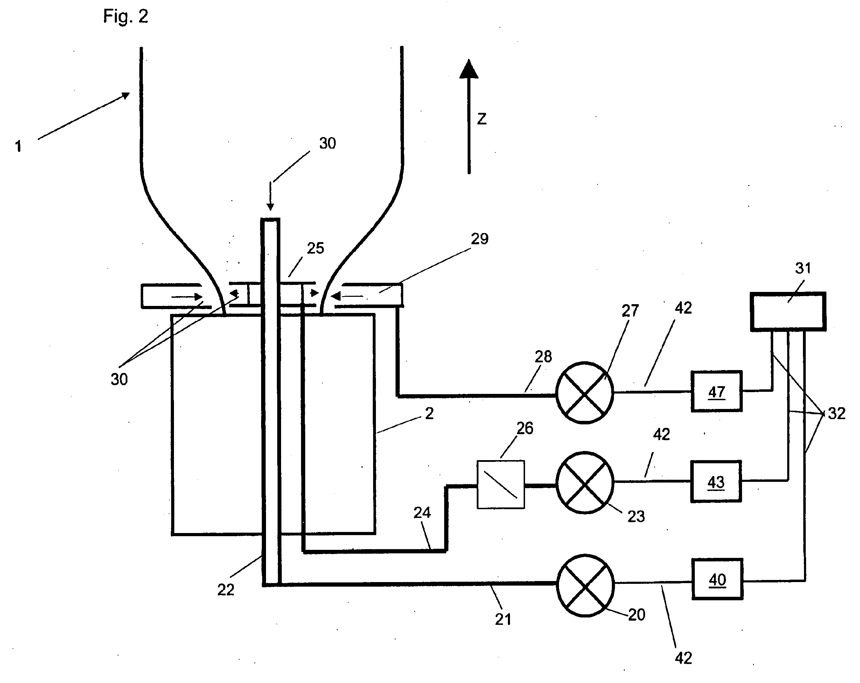

In Figur 2 sind verschiedene Kühlgebläseeinrichtungen, auf deren Darstellung in Figur 1 verzichtet wurde, dargestellt. Die Kühlgebläseeinrichtung 20 entnimmt in der Regel über die Luftableitung 21 und das Entlüftungsrohr 22 Luft aus dem Inneren des Folienschlauches 1. Das Luftvolumen, das von dieser Gebläseeinrichtung 20 aus dem Inneren des Schlauchs abgeleitet ist, ist im wesentlichen gleich dem Luftvolumen pro Zeiteinheit, welches von der Gebläseeinrichtung 23 über die Luftzuleitung 24 dem Innenkühlring 25 zugeleitet und von diesem in das Innere des Folienschlauches 1 geblasen wird. Oft ist gerade das Luftzuleitungsrohr 24 mit einer Klappenvorrichtung 26 versehen, mit welchem die Luftzuleitung in das Innere des Folienschlauches , gesteuert oder geregelt werden kann. Das Gebläse 27 leitet Luft über die Luftzuleitung 28 zu dem Außenkühlring 29, welcher die Luft auf den Folienschlauch 1 extrudiert. Die verschiedenen Pfeile 30 deuten jeweils die Richtung der Luft oder des Luftstromes an. Über die Luftgebläseleistung kann die Lage der Frostbereiches, welcher in Figur 1 mit dem Bezugszeichen 3 versehen ist, optimiert werden. Eine stärkere Kühlleistung führt dazu, dass sich die Frostlinie näher an dem Blaskopf 2 ausbildet. Ein Sinken der Gebläseleistung führt dazu, dass sich der Frostbereich 3 in Richtung der Förderrichtung z des Blasfolienschlauches bewegt. Die Kühlgebläseleistung kann durch die Drehzahl der Ventilatorenräder beeinflusst werden; es ist jedoch auch möglich, Klappen 26 zu diesem Zweck einzusetzen. Es hat sich gezeigt, dass bei der Steuerung und Regelung der Kühlgebläseleistung die Variation der Umdrehungsgeschwindigkeit der Ventilatoren vorteilhaft ist, da sich mit ihnen stetigere Veränderungen des Kühlluftstromes bewerkstelligen lassen. Bei dem erfindungsgemäßen Verfahren kann die Steuerung der Kühlgebläseleistung mit der Steuervorrichtung 31 vorgenommen werden. In Figur 2 ist die Steuervorrichtung 31 mit den Leistungsstellern 40, 43 und 47 über die Steuerleitungen 32 verbunden. Die Leistungssteller 40, 43 und 47 liegen oft als Frequenzrichter vor. Bei Gleichstrommotoren können jedoch auch Gleichrichter und Transformatoren zum Einsatz kommen. Die Leistungssteller 40, 43 und 47 sind über die Stromleitungen 42, welche natürlich mehradrig sein können, mit den Elektromaschinen der Gebläse 20, 23 und 27 verbunden, welche die Kühlluft mit nicht dargestellten Lüftungsrotoren, die von den Elektromaschinen angetrieben sind, fördern.

"Außenluft" im Sinne dieser Druckschrift ist Luft, die von den Kühlgebläsen angesogen wird. In der Regel handelt es sich um Hallenluft oder von außerhalb der Maschinenhalle angezogener Luft.

Die Kühlgebläseeinrichtung 20 saugt ihre Luft aus dem Inneren des Folienschlauches. Auch das kann mit oder ohne Klappen geschehen.

| **Bezugszeichenliste** | |
|---|---|
| 1 | Blasfolienschlauch |
| 2 | Blaskopf |
| 3 | Frostbereich |
| 4 | Kalibrierkorb |
| 5 | Flachlegeeinrichtung |
| 5a | Flachlegeplatten |
| 5b | Flachlegeplatten |
| 6 | Abquetschvorrichtung |
| 6a | Abquetschwalze |
| 6b | Abquetschwalze |
| 7 | Folienschlauch |
| 8 | Reversiervorrichtung |
| 9 | Umlenkwalzen |
| 10 | Wendestangen |
| 11 | Symmetrielinie des Blasfolienschlauches 1 |
| 12 | Transportwalze |
| 13 | |
| 14 | |
| 15 | Blasfolienanlage |
| 16 | |
| 17 | |
| 18 | |
| 19 | |
| 20 | Kühlgebläseeinrichtung |
| 21 | Luftableitung |
| 22 | Entlüftungsrohr |
| 23 | Gebläseeinrichtung |
| 24 | Luftzuleitung |
| 25 | Innenkühlring |
| 26 | Klappenvorrichtung |
| 27 | Gebläse |
| 28 | Luftzuleitung |
| 29 | Außenkühlring |
| 30 | Pfeile zur Andeutung des Luftstromes |
| 31 | Steuervorrichtung |
| 32 | Steuerleitung |
| | |
| | |
| 40 | Leistungssteller |
| 42 | Stromleitungen |
| 43 | Leistungssteller |
| 47 | Leistungssteller |
| z | Förderrichtung |

## Patentansprüche

1. Blasfolienanlage (15), welche folgende Merkmale umfasst:
- einen Blaskopf (2), aus welchem ein Folienschlauch (1) extrudierbar ist,
- zumindest ein Gebläse (20, 23, 27),
- mit welchem Luft an den Folienschlauch (1) heranführbar und/oder aus dem Inneren des Folienschlauches (1) herausführbar ist,
- und welches (20, 23, 27) zumindest einen Lüftungsrotor aufweist, der im Betrieb rotierbar ist,
- wobei zumindest ein Lüftungsrotor vorgesehen ist, der mit zuschaltbaren Mitteln zur Ableitung und Umwandlung von Bewegungsenergie (40, 43, 47) derart in Wirkverbindung steht,
- wobei die Rotation dieses Lüftungsrotors bremsbar ist,
- und wobei zumindest ein bremsbarer Lüftungsrotor durch eine Elektromaschine antreibbar ist,
**dadurch gekennzeichnet,**
- **dass** die zuschaltbaren Mittel zur Ableitung und Umwandlung von Bewegungsenergie des Rotors einen Leistungssteller (40, 43, 47) umfassen, mit welchem die Elektromaschine im generatorischen Betrieb betreibbar ist,
- **dass** die zuschaltbaren Mittel zur Ableitung und Umwandlung von Bewegungsenergie zumindest eine Speisevorrichtung umfassen,
- mit welcher während des generatorischen Betriebs der Elektromaschine entstandene elektrische Bremsenergie zumindest einer weiteren Elektromaschine zuführbar ist,
- **dass** mit der zumindest einen weiteren Elektromaschine ein weiterer Lüftungsrotor antreibbar ist,
- **dass** die zumindest eine weitere Elektromaschine, mit der der zumindest eine weitere Lüftungsrotor antreibbar ist, derselben Blasfolienanlage zugeordnet ist,
- und **dass** dieser weitere Lüftungsrotor der Außenkühlvorrichtung der Blasfolienanlage zugeordnet ist.

2. Blasfolienanlage nach Anspruch 1,
**dadurch gekennzeichnet, dass**
die zuschaltbaren Mittel zur Ableitung und Umwandlung von Bewegungsenergie zumindest eine mechanische Bremse umfassen.

3. Blasfolienanlage nach einem der vorstehenden Ansprüche,
**dadurch gekennzeichnet, dass**
- die zuschaltbaren Mittel zur Ableitung und Umwandlung von Bewegungsenergie (40, 43,47) zumindest einen Bremswiderstand umfassen,
- mit weichem während des generatorischen Betriebs der Elektromaschine entstandene elektrische Bremsenergie wandelbar ist.

4. Blasfolienanlage nach einem der vorstehenden Ansprüche,
**dadurch gekennzeichnet, dass**
- die zuschaltbaren Mittel zur Ableitung und Umwandlung von Bewegungsenergie zumindest eine Rückspeisevorrichtung umfassen,
- mit welcher während des generatorischen Betriebs der Elektromaschine entstandene elektrische Bremsenergie in ein Stromnetz zurückspeisbar ist.

5. Blasfolienanlage nach einem der drei vorstehenden Ansprüche,
**dadurch gekennzeichnet, dass**
ein zweiter weiterer Lüftungsrotor, der ebenfalls von einer Elektromaschine angetrieben wird, der während des generatorischen Betriebs entstandene elektrische Bremsenergie zuführgeführt wird, der Ablufteinrichtung für das Innere des Folienschlauchs einer Blasfolienanlage zugeordnet ist.

6. Blasfolienanlage nach einem der vier vorstehenden Ansprüche,
**dadurch gekennzeichnet, dass**
zumindest eine oder alle Gebläseleitungen klappenlos mit der Außenluft verbunden sind.

7. Verfahren zum Betrieb einer Blasfolienanlage (15) mit folgenden Verfahrensmerkmalen:
- Extrusion eines Folienschlauches (1)
- zumindest ein Gebläse (20, 23, 27),
- welches Luft an den Folienschlauch (1) heranführen und/oder welches Luft aus dem Inneren des Folienschlauches (1) herausführt,
- wobei zumindest ein Lüftungsrotor rotiert wird,
- wobei zuschaltbare Mittel zur Ableitung und Umwandlung von Bewegungsenergie (40, 43, 47) die Rotation dieses Lüftungsrotors bremsen
- und wobei zumindest ein bremsbarer Lüftungstotor durch eine Elektromaschine angetrieben wird,
**dadurch gekennzeichnet,**
- **dass** die zuschaltbaren Mittel zur Ableitung und Umwandlung von Bewegungsenergie des Rotors einen Leistungssteller (40, 43, 47) umfassen, mit welchem die Elektromaschine im generatorischen Betrieb betrieben wird,
- **dass** die während des generatorischen Betriebs der Elektromaschine entstandene elektrische Bremsenergie zumindest einer weiteren Elektromaschine - die derselben Blasfolienanlage zugeordnet ist - zugeführt wird,
- **dass** mit der zumindest einen weiteren Elektromaschine ein weiterer Lüftungsrotor angetrieben wird,
- und **dass** dieser weitere Lüftungsrotor der Außenkühlvorrichtung der Blasfolienanlage zugeordnet ist.

## Claims

1. Blow film line (15) comprising the following components:
- a blow head (2), a film tube (1) can be extruded,
- at least a fan (20, 23, 27),
- by means of which air can be introduced to the film tube (1) and/or lead through the interior of the film tube (1),
- and which (20, 23,27) comprises at least a ventilation rotor which is rotatable in operation,
- whereby at least a ventilation rotor is provided which interacts with the connectable means for conduction and compilation of kinetic energy (40, 43, 47),
- whereby the rotation of the ventilation rotor can be retarded
- and whereby at least a retardable ventilation rotor is driven by an electric machine,
**characterized in that**
- the connectable means for conduction and compilation of kinetic energy of the rotor comprise a power controller (40, 43, 47) by means of which the electric machine is operable in generating service,
- the connectable means for conduction and compilation of kinetic energy comprises at least a loading device,
- by means of which the electric braking energy resulting from the generating service of the electric machine can be fed to at least a further electric machine,
- by the at list one further electric machine, a further ventilation rotor can be driven,
- that the at least one further electric machine by means of which at least a further ventilation rotor is driven, belongs to the same blow film line,
- and that this further ventilator rotor is allocated to the external film cooling of the blow film line.

2. Blow film line according to claim 1,
**characterized in that**
the connectable means for conduction and compilation of kinetic energy comprise at least a mechanical brake.

3. Blow film line according to one of the preceding claims,
**characterized in that**
- the connectable means for conduction and compilation of kinetic energy (40, 43, 47) comprise at least a braking resistance,
- by means of which the electric braking energy resulting from the generating service of the electric machine is convertible.

4. Blow film line according to one of the preceding claims,
**characterized in that**
- the connectable means for conduction and compilation of kinetic energy comprise at least one recirculation device,
- by means of which the electric braking energy resulting from the generating service of the electric machine can be returned into the mains supply.

5. Blow film line according to one of the three preceding claims,
**characterized in that**
a second further ventilation rotor which is also driven by an electro machine to which the electric braking energy resulting from the generating service is returned, is related to the air evacuation device for the internal of the film tube of a blow film line.

6. Blow film line according to one of the four preceding claims,
**characterized in that**
at least one or all ventilation lines are joint to the surrounding air without flaps.

7. Process for the operation of a blow film line (15) comprising the following process characteristics:
- extrusion of a film tube (1)
- at least one fan (20, 23, 27),
- by means of which air is lead to the film tube (1) and/or which leads air out of the internal of the film tube (1),
- whereby at least one ventilation rotor is rotated,
- whereby connectable means for conduction and compilation of kinetic energy (40, 43, 47) retard the movement of this ventilation rotor
- and whereby at least a retardable ventilation rotor is driven by an electric machine,
**characterized in**
- **that** the connectable means for conduction and compilation of kinetic energy of the rotor comprise a power controller (40, 43, 47) by means of which the electric machine is operable in generating service,
- **that** the at least one further electric machine by means of which at least a further ventilation rotor is driven, belongs to the same blow film line,
- by the at list one further electric machine, a further ventilation rotor can be driven,
- and **that** this further ventilator rotor is allocated to the external film cooling of the blow film line.

## Revendications

1. Installation de feuilles soufflées (15), qui comprend les caractéristiques suivantes:
- une tête de soufflage (2), de laquelle peut être extrudée une gaine en feuille (1),
- au moins une soufflerie (20, 23, 27),
- par laquelle l'air peut être amené à la gaine en feuille (1) et/ou peut être évacué de l'intérieur de la gaine en feuille (1),
- et qui (20, 23, 27) présente au moins un rotor d'aération qui, en cours de fonctionnement, peut être entraîné en rotation,
- où au moins un rotor d'aération est prévu qui est fonctionnellement relié à des moyens commutables pour évacuer et transformer l'énergie de mouvement (40, 43, 47),
- où la rotation de ce rotor d'aération peut être freinée,
- et où au moins un rotor d'aération freinable peut être entraîné par une électromachine,
**caractérisé en ce que**
- les moyens commutables pour la dérivation et transformation d'énergie de mouvement du rotor comprennent un organe de réglage de puissance (40, 43, 47) au moyen duquel l'électromachine peut être amenée à fonctionner selon un fonctionnement génératoire,
- **en ce que** les moyens commutables pour la dérivation et la transformation d'énergie de mouvement comprennent au moins un dispositif d'alimentation,
- au moyen duquel l'énergie de freinage électrique produite durant le fonctionnement génératoire de l'électromachine peut être amenée à au moins une autre électromachine,
- **en ce qu'**avec au moins l'autre électromachine un autre rotor d'aération peut être entraîné,
- **en ce qu'**au moins l'autre électromachine, au moyen de laquelle peut être entraîné le au moins un autre rotor d'aéaration, est associée à la même installation de feuilles soufflées,
- et **en ce que** cet autre rotor d'aération est associé au dispositif de refroidissement extérieur de l'installation de feuilles soufflées.

2. Installation de feuilles soufflées selon la revendication 1,
**caractérisée en ce que**
les moyens commutables pour la dérivation et la transformation de l'énergie de mouvement comprennent au moins un frein mécanique.

3. Installation de feuilles soufflées selon l'une des revendications précédentes,
**caractérisée en ce que**
- les moyens commutables pour la dérivation et la transformation d'énergie de mouvement (40, 43, 47) comprennent au moins une résistance de freinage,
- par laquelle l'énergie de freinage électrique produite durant le fonctionnement génératoire de l'électromachine peut être transformée.

4. Installation de feuilles soufflées selon l'une des revendications précédentes,
**caractérisée en ce que**
- les moyens commutables pour la dérivation et la transformation d'énergie de mouvement comprennent au moins un dispositif d'alimentation de retour,
- au moyen duquel l'énergie de freinage électrique produite pendant le fonctionnement génératoire de l'électromachine peut être ramenée dans un réseau.

5. Installation de feuilles soufflées selon l'une des trois revendications précédentes,
**caractérisée en ce qu'**un
deuxième rotor d'aération additionnel, qui est également entraîné par une électromachine, à laquelle est amenée l'énergie de freinage électrique produite durant le fonctionnement génératoire, est associé à l'installation d'air d'évacuation pour l'intérieur de la gaine en feuille d'une installation de feuilles soufflées.

6. Installation de feuilles soufflées selon l'une des quatre revendications précédentes,
**caractérisée en ce qu'**
au moins une ou toutes les conduites de soufflerie sont reliées sans clapet à l'air extérieur.

7. Procédé pour le fonctionnement d'une installation de feuilles soufflées (15) avec les caractéristiques de procédé suivantes:
- extrusion d'une gaine en feuille (1)
- au moins une soufflerie (20, 23, 27),
- qui amène l'air à la gaine en feuille (1) et/ou qui évacue l'air de l'intérieur de la gaine en feuille (1),
- où au moins un rotor d'aération est entraîné en rotation,
- où des moyens commutables pour la dérivation et la transformation d'énergie de mouvement (40, 43, 47) freinent la rotation de ce rotor d'aération,
- et où au moins un rotor d'aération freinable est entraîné par une électromachine,
**caractérisée en ce que**
- les moyens commutables pour la dérivation et la transformation de l'énergie de mouvement du rotor comprennent un organe de réglage de puissance (40, 43, 47) au moyen duquel l'électromachine est amenée à fonctionner selon un mode génératoire,
- **en ce que** l'énergie de freinage électrique produite pendant le fonctionnement génératoire de l'électromachine est amenée à au moins une autre électromachine - qui est associée à la même installation de feuilles soufflées -,
- **en ce qu'**au moyen de la au moins une autre électromachine un autre rotor d'aération est entraîné,
- et **en ce que** cet autre rotor d'aération est associé au dispositif de refroidissement extérieur de l'installation de feuilles soufflées.
